# EUROPEAN PATENT APPLICATION

(11) **EP 3 369 944 A1**
(43) Date of publication of application: **05.09.2018**
(21) Application number: 16859770.6
(22) Date of filing: 25.10.2016
(51) Int. Cl.: F15B 15/18, F15B 15/14, F16F 9/32

(54) **HYDRAULIC DEVICE**

(30) Priority: 27.10.2015 JP 2015210386
(71) Applicant: KYB Corporation, Tokyo 105-6111 (JP)
(72) Inventor: OGAWA, Takayuki, Tokyo 105-6111 (JP); KOUGE, Takuya, Tokyo 105-6111 (JP)
(74) Representative: MFG Patentanwälte Meyer-Wildhagen Meggle-Freund Gerhard PartG mbB
(86) International application number: PCT/JP2016/081527
(87) International publication number: WO 2017/073540

(57) **Abstract**

A hydraulic device of the present invention includes: a cylinder body (S) including a cylinder (1) and a rod (2) that moves retractably inside the cylinder (1); and a pump unit (30) that is formed with an oil passage (31) and discharges, at an intermediate position in the oil passage (31), liquid into the cylinder (1) through driving of a motor (M). The cylinder body (S) is connected to the pump unit (30) via an extension (40) having an oil passage (41) that provides communication between the oil passage (31) of the pump unit (30) and an interior of the cylinder (1).

## Description

### Technical Field

This invention relates to a hydraulic device.

### Background Art

A known hydraulic device interposed between a vehicle body and a truck of a railroad vehicle is, for example, a damper or an actuator that suppresses vibration of the vehicle body by exerting damping force.

In such a hydraulic device, as disclosed in JP 2006-322501 A, a cylinder body that is formed of a cylinder, a rod that goes into and out of the cylinder, and a piston provided at an end of the rod is mounted with, for example, a pump unit including a pump and a motor that drives the pump, and a valve unit that allows the cylinder body to function as a damper or an actuator.

### Summary of the Invention

There are various methods of mounting the pump unit to the cylinder body. In the hydraulic device disclosed in JP 2006-322501 A, for example, the pump unit is connected to the cylinder body by welding and is provided with two pipes for communication with a contraction-side chamber and an expansion-side chamber of the cylinder. As such, changing a welding position of the pump unit and respective lengths and respective positions of the pipes enables positioning of the pump unit in a location of choice on the cylinder body.

In the hydraulic device of Patent Literature 1, however, the pump unit communicates with the cylinder' s two chambers that are divided by the piston from each other via the respective pipes, so that the pipes respectively connected to the expansion-side chamber and the contraction-side chamber need to have their lengths designed according to every mounting location of the pump unit with respect to the cylinder body. Accordingly, changing the mounting location has involved higher costs.

It is also conceivable that the pump unit is fixedly bolted to a cap member provided at a counter rod-side end of the cylinder. However, mounting the pump unit in this way causes the pump and the motor to be disposed near a bracket, so that there are cases where it is difficult to mount the cylinder body to the vehicle.

It is therefore an object of the present invention to provide a hydraulic device that enables positioning of an oil passage member such as a pump unit in a location of choice with respect to a cylinder body and facilitates mounting of the oil passage member to the cylinder body.

To this end, in the present invention, the cylinder body including a rod that moves retractably inside a cylinder communicates, via an extension formed with an oil passage, with the oil passage member formed with an oil passage.

### Brief Description of Drawings

Fig. 1 is a longitudinal section of a hydraulic device according to a first embodiment.
Fig. 2 is a perspective general view of the hydraulic device according to the first embodiment.
Fig. 3 is a circuit diagram illustrating another example of a variable relief valve.
Fig. 4 is a perspective general view of an extension according to this embodiment.
Fig. 5 is a longitudinal section of a hydraulic device according to a second embodiment.

### Description of Embodiments

A description is provided hereinafter of these embodiments with reference to the accompanying drawings. The same reference marks given throughout several drawings indicate identical or corresponding components.

In each of these embodiments, a hydraulic device is an actuator that suppresses side-to-side motion of a vehicle body in a railroad vehicle.

### <First Embodiment>

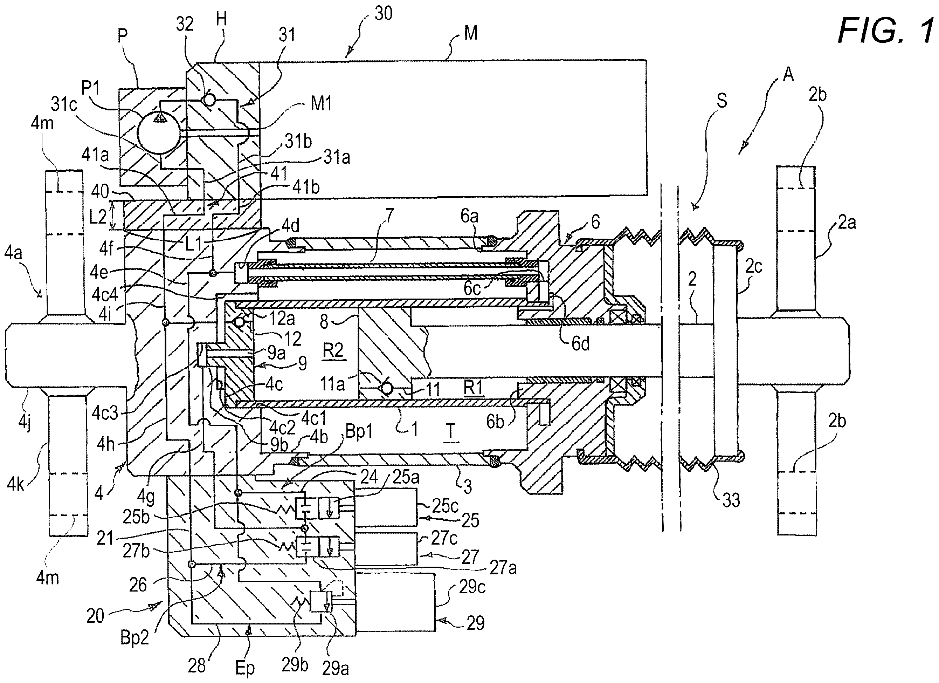

A detailed description is provided hereinafter of an actuator A according to the first embodiment. As shown in Fig. 1, the actuator A is formed to include a cylinder body S, a pump unit 30 that is mounted as an oil passage member to one side of the cylinder body S via an extension 40, and a valve unit 20 that is mounted to another side of the cylinder body S. The cylinder body S is formed to include a cylinder 1, a rod 2 retractably inserted in the cylinder 1, an outer cylinder 3 accommodating the cylinder 1, a tank T formed between the cylinder 1 and the outer cylinder 3, an end cap 4 joined to one end of the outer cylinder 3, that is to say, a left end of the outer cylinder 3 in Fig. 1, and an annular rod guide 6 joined to another end of the outer cylinder 3, that is to say, a right end of the outer cylinder 3 in Fig. 1.

The cylinder 1 is tubular, and one end of the cylinder 1 that is a left end in Fig. 1 is closed with a valve case 9, while another end of the cylinder 1 that is a right end in Fig. 1 is fitted with the rod guide 6. The rod 2 is slidably inserted into the rod guide 6 to be retractably inserted in the cylinder 1. This rod 2 has one end projecting outwardly of the cylinder 1 and another end connected inside the cylinder 1 to a piston 8 that is similarly inserted into the cylinder 1 to be slidable.

The piston 8 slidably inserted into the cylinder 1 divides the cylinder 1 into an expansion-side chamber R1 on a right side in Fig. 1 and a contraction-side chamber R2 on a left side in Fig. 1, and the expansion-side chamber R1 and the contraction-side chamber R2 are filled with liquid such as hydraulic oil. The rod 2 is provided with, at its one end that is a right end in Fig. 1, a bracket 2a that is a mounting member connectable to either one of a truck and a vehicle body of a railroad vehicle. As shown in Fig. 1, the bracket 2a is mounted to pass through the rod 2 in a radial direction orthogonal to the rod 2 and is provided with a pair of bolt holes 2b, 2b in its respective leading ends. Although not shown in the drawing, the truck and the vehicle body of the railroad vehicle are each provided with a coupling member that extends between the bracket 2a and the vehicle body or the truck. When the actuator A is mounted to the railroad vehicle, bolts are respectively inserted into the bolt holes 2b, 2b to fasten the coupling member and the bracket 2a together.

The piston 8 is provided with a piston passage 11 that provides communication between the contraction-side chamber R2 and the expansion-side chamber R1, and a check valve 11a is included at an intermediate position in the piston passage 11. The check valve 11a allows only flow of the liquid heading from the contraction-side chamber R2 to the expansion-side chamber R1, so that the piston passage 11 is set as a one-way passage.

As described above, the valve case 9 is a member that closes the end of the cylinder 1 and includes a through hole 9a that is provided in its center, and an inlet passage 12 that provides communication between the tank T and the contraction-side chamber R2. A check valve 12a is included at an intermediate position in the inlet passage 12. The valve case 9 is provided with, in a center of its left edge, an axially extending shaft 9b, and the through hole 9a opens at a leading edge of the shaft 9b and leads to a right edge of the valve case 9. The inlet passage 12 leads to the right edge of the valve case 9 from a position in the left edge of the valve case 9 where the shaft 9b is avoided. The check valve 12a allows only flow of the liquid heading from the tank T to the contraction-side chamber R2, so that the inlet passage 12 is set as a one-way passage.

The rod guide 6 according to the present embodiment is formed to include an outer peripheral fitting part 6a that is fitted to the right end of the outer cylinder 3 in Fig. 1, and an inner peripheral fitting part 6b that is fitted to the right end of the cylinder 1 in Fig. 1. In addition, the rod guide 6 is provided with a fitting hole 6c in its surface that faces the tank T, and is formed with a passage 6d that provides communication between the fitting hole 6c and the expansion-side chamber R1.

The end cap 4 is welded to the one end of the outer cylinder 3, that is to say, the left end of the outer cylinder 3 in Fig. 1, thus closing the one end of the outer cylinder 3. The end cap 4 is provided with, at its left end in Fig. 1, a bracket 4a that is a mounting member connectable to the other of the truck and the vehicle body of the railroad vehicle. The bracket 4a is connected to the left end of the end cap 4 in Fig. 1 and is formed to include a rod body 4j that is provided coaxially with the rod 2, and a bracket part 4k that is mounted to pass through the rod body 4j in a radial direction orthogonal to the rod body 4j. The bracket part 4k is provided with a pair of bolt holes 4m, 4m in its respective ends. Although not shown in the drawing, when the actuator A is mounted to the railroad vehicle, bolts are respectively inserted into the bolt holes 4m, 4m for fastening to a counterpart of the coupling member of the vehicle body or the truck of the railroad vehicle that is bolted to the bracket 2a provided at the end of the rod 2.

The end cap 4 is provided with, at its right end in Fig. 1, a tubular fitting part 4b fitted to the outer cylinder 3, a recessed part 4c in which the left end of the cylinder 1 and the valve case 9 are fitted, and a fitting hole 4d that opens peripherally outwardly of the recessed part 4c.

The recessed part 4c includes a large diameter part 4c1 that is of a larger inside diameter than respective outside diameters of the valve case 9 and the cylinder 1, a medium diameter part 4c2 that is continuous with a left edge of the large diameter part 4c1 and has a smaller inside diameter than the large diameter part 4c1, and a small diameter part 4c3 that is continuous with a left edge of the medium diameter part 4c2 and has a smaller inside diameter than the medium diameter part 4c2. When the end of the cylinder 1 that is fitted with the valve case 9 is inserted in this recessed part 4c, the shaft 9b of the valve case 9 is inserted in the small diameter part 4c3, whereby the cylinder 1 and the valve case 9 are positioned radially. The diameter of the medium diameter part 4c2 is smaller than the outside diameter of the valve case 9, and with the insertion of the cylinder 1 and the valve case 9 in the large diameter part 4c1, the valve case 9 seats on a step between the large diameter part 4c1 and the medium diameter part 4c2, thus having a space to its left. The cylinder 1 and the valve case 9 have an annular clearance formed with respect to the large diameter part 4c1, and this annular clearance leads to the tank T and communicates with the gap via a groove 4c4 formed from the large diameter part 4c1 to the medium diameter part 4c2. The gap faces the inlet passage 12 provided in the valve case 9, and the inlet passage 12 communicates with the tank T via the annular clearance and the space, whereby the communication between the contraction-side chamber R2 and the tank T is ensured.

The tank T is filled with gas in addition to the liquid. The tank T does not need to be internally pressurized by being filled with compressed gas. In the tank T, a pipe 7 is provided. The pipe 7 is formed with a passage that is isolated from the tank T and has its ends respectively inserted in the fitting hole 4d of the end cap 4 and the fitting hole 6c of the rod guide 6, thereby being held by the end cap 4 and the rod guide 6.

As described above, the fitting hole 6c connects with the passage 6d that communicates with the expansion-side chamber R1, so that the pipe 7 internally communicates with the expansion-side chamber R1.

The end cap 4 is also provided with laterally opening passageways 4e, 4f that communicate with the expansion-side chamber R1 via the pipe 7, a laterally opening passageway 4g that communicates with the contraction-side chamber R2 via the through hole 9a provided in the valve case 9, and laterally opening passageways 4h, 4i that communicate with an interior of the tank T.

The end cap 4 has one lateral side that is mounted with the pump unit 30 via the extension 40. The extension 40 is internally provided with an oil passage 41 that is formed of two passages including a first oil passage 41a and a second oil passage 41b. The pump unit 30 sucks in the liquid from inside the tank T via the passageway 4i, 4f of the end cap 4 and the first oil passage 41a and discharges the liquid into the expansion-side chamber R1 via the second oil passage 41b and the pipe 7. In other words, the pump unit 30 supplies the expansion-side chamber R1 with the liquid from the tank T via the oil passage 41 of the extension 40.

Specifically, the pump unit 30 is formed to include a pump P including a pump body P1 that is capable of delivering the liquid, a motor M that drives the pump P, and a holder H that holds the pump P at its counter rod-side end and has the motor M connected to its rod-side end to hold the motor M, and the pump unit 30 is formed with an oil passage 31 that provides communication between a discharge port of the pump P and the expansion-side chamber R1 and communication between a suction port of the pump P and the tank T. It is to be noted that a positional relationship between the motor M and the pump P is not limited to this. The holder H may have the pump P connected to its rod side and the motor M connected to its counter rod side.

The holder H is provided with a suction oil passage 31a and a discharge oil passage 31b that open at the same lateral side of the holder H. The pump P is formed with a pump oil passage 31c into which the liquid flows from the suction oil passage 31a to be led to the discharge oil passage 31b through the pump body P1. Thus, the oil passage 31 formed in the pump unit 30 is formed of the suction oil passage 31a, the pump oil passage 31c, and the discharge oil passage 31b. In order for the liquid that flows into the oil passage 31 to be sucked in from the suction oil passage 31a and to be discharged from the discharge oil passage 31b, the discharge oil passage 31b is provided with, at an intermediate position, a check valve 32 that prevents backflow of the liquid toward the discharge oil passage 31b.

The motor M includes a shaft M1 that is connected to the pump body P1 through the holder H. As the motor M is driven, the shaft M1 is rotationally driven. Accordingly, the pump body P1 sucks in the liquid from the tank T and discharges the liquid into the expansion-side chamber R1. In the present embodiment, a gear pump is used as the pump P. However, it is to be noted that the pump P is not limited to this.

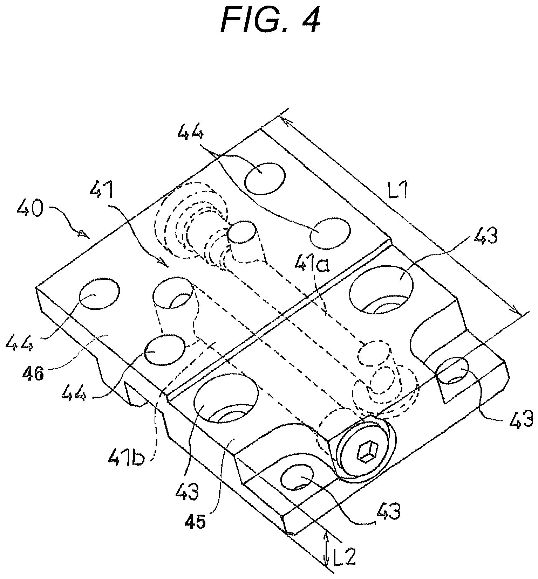

The extension 40 is a member that connects the pump unit 30, which is the oil passage member, to the cylinder body S and is internally formed with, as shown in Figs. 1 and 4, the oil passage 41 that is formed of the two passages including the first oil passage 41a and the second oil passage 41b. The first oil passage 41a of the extension 40 connects the suction oil passage 31a provided in the pump unit 30 to the passageway 4i provided in the end cap 4, while the second oil passage 41b connects the passageway 4f to the discharge oil passage 31b. As such, the oil passage 31 of the pump unit 30 is enabled by the pump body P1 to suck in the liquid from the tank T via the passageway 4i and to supply the expansion-side chamber R1 with the liquid from the discharge oil passage 31b via the passageway 4f, the pipe 7, and the passage 6d.

The end cap 4 has another lateral side that is mounted with the valve unit 20. The valve unit 20 includes a liquid pressure circuit 21 communicating with an interior of the cylinder body S via the passageways 4e, 4h, 4g and includes, in the liquid pressure circuit 21, a first on-off valve 25, a second on-off valve 27, and a variable relief valve 29. The actuator A is driven actively to extend and contract through switching of these valves.

The liquid pressure circuit 21 is formed to include a passage 24 having one end connected to the passageway 4e and another end communicating with the passageway 4g, the first on-off valve 25 provided at an intermediate position in the passage 24, a passage 26 having one end at an intermediate position between the first on-off valve 25 and the passageway 4g in the passage 24 to connect this intermediate position with the passageway 4h, the second on-off valve 27 provided at an intermediate position in the passage 26, a passage 28 branching off from the passage 24 to connect with the passage 26, and the variable relief valve 29 provided in the passage 28.

The passage 24 and the passageways 4e, 4g form a first bypass passage Bp1 that communicates with the contraction-side chamber R2 and with the expansion-side chamber R1 via the pipe 7.

The passage 26 and the passageways 4g, 4h form a second bypass passage Bp2 that provides communication between the contraction-side chamber R2 and the tank T.

The passage 28 and the passageways 4e, 4h form an exhaust passage Ep that serves as an oil passage communicating with the tank T and with the expansion-side chamber R1 via the pipe 7.

The first on-off valve 25 is an electromagnetic on-off valve provided at an intermediate position in the first bypass passage Bp1 and is formed to include a valve 25a having a communicating position and a blocking position, a spring 25b that biases the valve 25a so that the valve 25a assumes the blocking position, and a solenoid 25c that switches the valve 25a to the communicating position against the spring 25b when energized.

The second on-off valve 27 is an electromagnetic on-off valve provided at an intermediate position in the second bypass passage Bp2 and similarly to the first on-off valve 25, is formed to include a valve 27a having a communicating position and a blocking position, a spring 27b that biases the valve 27a toward the blocking position, and a solenoid 27c that switches the valve 27a to the communicating position when energized.

The variable relief valve 29 is a proportional solenoid relief valve provided at an intermediate position in the exhaust passage Ep and is formed to include a valve element 29a provided at an intermediate position in the passage 28, a spring 29b biasing the valve element 29a to block the passage 28, and a proportional solenoid 29c that generates thrust against the spring 29b when energized. As such, with adjustment of an amount of current that flows through the proportional solenoid 29c, valve opening pressure of the variable relief valve 29 can be adjusted.

In the actuator A having such a structure, when the first on-off valve 25 and the second on-off valve 27 are in the communicating position and the blocking position, respectively with the liquid being supplied at a predetermined discharge flow rate from the pump P to the expansion-side chamber R1, the expansion-side chamber R1 and the contraction-side chamber R2 are placed in communication with each other. As such, the liquid is supplied from the pump P to both the expansion-side chamber R1 and the contraction-side chamber R2, the sum of capacities of the expansion-side chamber R1 and the contraction-side chamber R2 increases, and the rod 2 is extruded rightward in Fig. 1 from the cylinder 1. Consequently, the actuator A extends. When pressure inside the expansion-side chamber R1 and the contraction-side chamber R2 exceeds the valve opening pressure of the variable relief valve 29, the variable relief valve 29 opens, whereby the liquid is discharged into the tank T via the passageway 4h. The pressure inside the expansion-side chamber R1 and the contraction-side chamber R2 is thus controlled to the variable relief valve's valve opening pressure that is determined by the amount of current applied to the variable relief valve 29. Thrust exerted in an extending direction by the actuator A is equal to a value obtained by multiplying a pressure receiving area difference at the piston 8 between the contraction-side chamber R2 and the expansion-side chamber R1 by the above-described pressure inside the expansion-side chamber R1 and the contraction-side chamber R2 that is controlled by the variable relief valve 29.

When the first on-off valve 25 and the second on-off valve 27 are in the blocking position and the communicating position, respectively with the liquid being supplied at a predetermined discharge flow rate from the pump P to the expansion-side chamber R1, the liquid is supplied only to the expansion-side chamber R1, so that the expansion-side chamber R1 expands. By contrast, the contraction-side chamber R2 contracts, and the liquid is discharged from inside the contraction-side chamber R2 into the tank T through the second on-off valve 27. Accordingly, the piston 8 is pushed leftward in Fig. 1, so that the actuator A contracts. In this case, pressure in the contraction-side chamber R2 becomes tank pressure and thus is constant, while pressure in the expansion-side chamber R1 is controlled to the valve opening pressure of the variable relief valve 29. Thrust exerted in a contracting direction by the actuator A as a result of, similarly to the above, adjustment of the amount of current applied to the variable relief valve 29 is equal to a value obtained by multiplying the piston's pressure receiving area in the expansion-side chamber R1 by the pressure inside the expansion-side chamber R1 that is controlled by the variable relief valve 29.

When the first on-off valve 25 and the second on-off valve 27 are both in the blocking positions, the expansion-side chamber R1, the contraction-side chamber R2, and the tank T are strung together by the piston passage 11, the inlet passage 12, and the exhaust passage Ep for communication. A string of these passages is set as a one-way passage. As such, when the actuator A is caused by external force to extend and contract, the liquid is discharged from the expansion-side chamber R1 without fail and returns to the tank T through the variable relief valve 29. As for a liquid shortage in the cylinder 1, the liquid is supplied from the tank T to the contraction-side chamber R2 via the inlet passage 12. By becoming resistance to this liquid flow, the variable relief valve 29 functions as a pressure control valve that adjusts pressure inside the cylinder 1 to the valve opening pressure, so that the actuator A can function as a passive uniflow damper. In the event of such a failure that each of the parts of the actuator A cannot be energized, the respective valves 25a, 27a of the first on-off valve 25 and the second on-off valve 27 are respectively urged by the springs 25b, 27b, thereby assuming their respective blocking positions. In addition, the variable relief valve 29 functions as a pressure control valve that has its valve opening pressure fixed at a maximum level, so that the actuator A automatically functions as a passive damper.

In this way, this actuator A can function not only as an actuator but also as a damper irrespective of driven condition of the motor M and does not involve troublesome and sudden valve switching, so that a highly reliable system of high response can be provided.

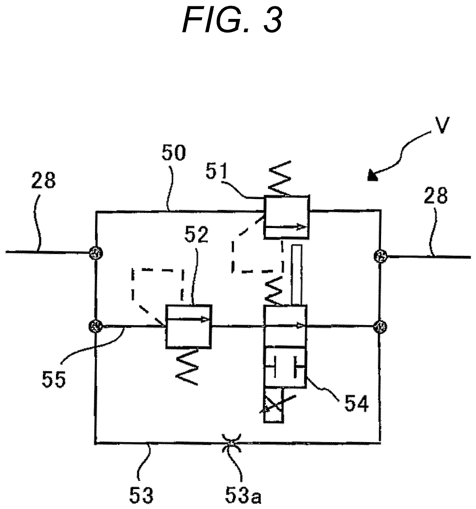

It is to be noted that the variable relief valve 29 according to the present embodiment may be changed for a circuit V shown in Fig. 3. This circuit V is formed to have three passages including a first, a second, and a third passage 50, 55, 53 that are provided in parallel. The first passage 50 is provided with a variable relief valve 51, the second passage 55 is provided with a relief valve 52 and an on-off valve 54, and the third passage 53 is provided with a throttle 53a. The on-off valve 54 is open when not energized and is closed when energized, so that valve opening pressure of the variable relief valve 51 can be controlled by an amount of current. When the on-off valve 54 is open, the relief valve 52 imparts resistance to flow of the liquid passing through the circuit V. When the on-off valve 54 is closed, the variable relief valve 51 imparts resistance to the flow of the liquid passing through the circuit V.

Thus, even with the use of the circuit V, the actuator A is susceptible of thrust control and can function also as a passive damper.

A detailed description is provided next of structure and a procedure for mounting the pump unit 30 to the lateral side of the cylinder body S via the extension 40 according to the present embodiment.

As shown in Fig. 4, the extension 40 is formed to include a cylinder-end connecting part 45 that is mounted to the cylinder body S, and an oil-passage-member-end connecting part 46 that is continuous with the cylinder-end connecting part 45 and is mounted to the pump unit 30. The cylinder-end connecting part 45 is provided with four bolt holes 43, and the oil-passage-member-end connecting part 46 is provided with four bolt holes 44.

Bolts are respectively inserted into the bolt holes 43 provided in the cylinder-end connecting part 45 and the bolt holes 44 provided in the oil-passage-member-end connecting part 46 to connect the cylinder-end connecting part 45 and the oil-passage-member-end connecting part 46 to the end cap 4 of the cylinder body S and the holder H of the pump unit 30, respectively.

In the present embodiment, the bolt holes 43 or the bolt holes 44 that are provided are four in number; however, the bolt holes 43 or the bolt holes 44 are not limited to this in number provided that the pump unit 30 can be supported.

With such connection of the pump unit 30 to the cylinder body S, the pump unit 30 is offset from the cylinder body S by a clearance between a position where the one part of the extension 40 is connected to the end cap 4 and a position where the other part of the extension 40 is connected to the holder H.

This offset amount is determined by an axial length L1 that extends axially of the cylinder body S when the extension 40 is mounted, and a radial length L2 that extends radially of the cylinder body S when the extension 40 is mounted. As such, the pump unit 30 is offset axially with respect to the cylinder body S if the axial length L1 of the extension 40 is changed, and the pump unit 30 is offset radially with respect to the cylinder body S if the radial length L2 is changed.

This means that when the extension 40 is replaced by another extension 40 of which one or both of the axial length L1 and the radial length L2 are different, the pump unit 30 can be positioned either axially or radially or both in a location of choice with respect to the cylinder body S.

Moreover, the extension 40 can be mounted freely along a periphery of the cylinder body S, so that the pump unit 30 can be positioned not only axially and radially, but also along the periphery in a location of choice.

According to the present invention, the pump unit 30 can thus be adjusted to a mounting location of choice without any changes to, for example, opening positions of the passageways 4e to 4i provided in the end cap 4 of the cylinder body S.

In the present embodiment, the cylinder-end connecting part 45 and the oil-passage-member-end connecting part 46 of the extension 40 are continuous with each other; however, an intermediate member may be provided between the cylinder-end connecting part 45 and the oil-passage-member-end connecting part 46.

A shape of this intermediate member may be of choice. For example, with an intermediate member that is longer along an axis of the cylinder body S, the axial length L1 of the extension 40 can be increased. With an intermediate member being of shape that is extended radially from the cylinder body S, the radial length L2 of the extension 40 can be increased without causing the extension 40 to have its thickness increased throughout.

With the intermediate member provided between the cylinder-end connecting part 45 and the oil-passage-member-end connecting part 46, the extension 40 thus made has an axial length L1 of choice and a radial length L2 of choice that can be obtained simply by changing length and the shape of the intermediate member.

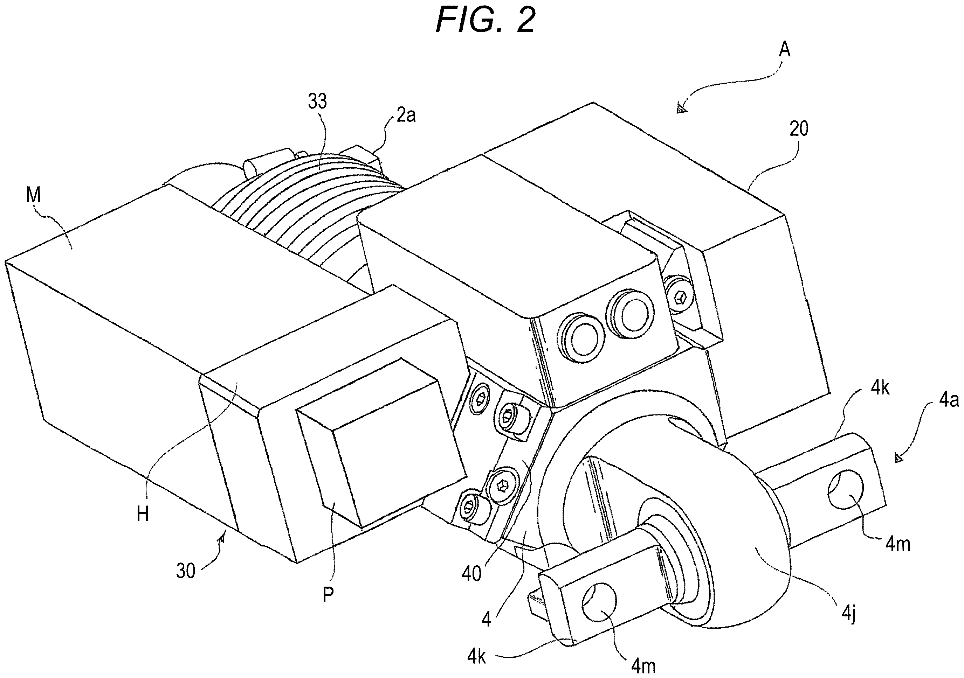

As shown in Fig. 2, the end cap 4 of the cylinder body S is of such polygonal-pillar shape that its bottom face is of shape formed by obliquely cutting off one corner of a quadrangle, thus having one of its lateral sides as a slanted face. The extension 40 has the outside shape of a rectangular parallelepiped for abutment on the slanted face that is a mounting face.

It is to be noted that the outside shape of the extension 40 has only to correspond to shape of the end cap's face to which the extension 40 is mounted. For example, in cases where the end cap 4 is cylindrical, the extension 40 may have an end-cap-end mounting face that is curved according to outer peripheral shape of the end cap 4. With the outside shape of the extension 40 thus changed according to the shape of the mounting face of the cylinder body S, the extension 40 as well as the pump unit 30 can be mounted no matter what shape the mounting face is of.

As described above, the end cap's mounting face that is made by cutting off the one corner of the quadrangle is mounted with the pump unit 30 via the extension 40 in the present embodiment. As such, the pump unit 30 can be positioned near a center of gravity of the cylinder body S. It is to be noted here that moment of inertia about the axis that acts on the pump unit 30 while the hydraulic device is driven is determined according to a radial distance between a center of gravity of the pump unit 30 and the center of gravity of the cylinder body S. As this distance increases, the moment of inertia that acts on the pump unit 30 increases. In the present embodiment, because the pump unit 30 can be positioned near the center of gravity of the cylinder body S, it is difficult for the moment of inertia to act on the pump unit 30 while the actuator A is driven.

A description is provided of the procedure for mounting the pump unit 30 to the cylinder body S. First, the bolts are respectively inserted into the bolt holes 44 of the extension 40, and only the holder H is connected to the oil-passage-member-end connecting part 46 of the extension 40. Next, the bolts are respectively inserted into the bolt holes 43 of the extension 40, and the cylinder-end connecting part 45 of the extension 40 is connected to the end cap 4 of the cylinder body S, thus connecting the holder H to the cylinder body S. Subsequently, the motor M and the pump P are mounted to the holder H. The pump unit 30 is thus mounted to the cylinder body S.

According to this procedure, the pump P is not yet mounted to the holder H when the bolts are inserted into the bolt holes 43, respectively, so that the bolt insertion can be carried out smoothly without interference from the pump P. In the present embodiment, the pump P is held by being connected to the counter rod side of the holder H, so that after the pump unit 30 is mounted, the pump P is disposed in front of the bolt holes 43 of the extension 40 as shown in Fig. 2. Thus, even if the bolts inserted into the respective bolt holes 43 loosen, the pump P assumes such a position as to cover the bolt holes 43, thereby preventing the bolts from falling.

In the present embodiment, as shown in Fig. 2, the pump unit 30 is mounted diagonally above the cylinder body S via the extension 40 in offset relation with the cylinder body S along the periphery of the cylinder body S. With the pump unit 30 being offset from the cylinder body S, a space can be secured on the lateral side of the cylinder body S.

As shown in Fig. 1, a dust boot 33 is mounted over an outer periphery of the rod guide 6 of the cylinder body S and an outer periphery of an annular boot holder 2c provided at the leading end of the rod 2. This dust boot 33 covers an outer periphery of the rod 2 to protect the rod's surface that slides on the rod guide 6 from dust and flying stones. In the present embodiment, the pump unit 30 is mounted on a counter rod side of the cylinder 1 by being connected to the end cap 4 via the extension 40, so that there is no possibility of interference between the pump unit 30 and the dust boot 33 that is mounted around the leading end of the rod 2.

In the present embodiment, the pump unit 30 is mounted as the oil passage member to the cylinder body S via the extension 40. However, it is to be noted that the valve unit 20 may be an oil passage member with the pump unit 30 omitted to achieve a semi-active damper. In this case, the valve unit 20 has only to have the exhaust passage Ep that serves as the oil passage providing communication between the expansion-side chamber R1 and the tank T, and the variable relief valve 29 at the intermediate position in the exhaust passage Ep. The liquid inside the cylinder 1 thus passes through the variable relief valve 29 at all times when the rod 2 is caused by external force to extend and contract, so that the semi-active damper functions, exerting damping force according to valve opening pressure of the variable relief valve 29.

Alternatively, both the pump unit 30 and the valve unit 20 may be oil passage members and may be mounted to the cylinder body S via respective extensions 40. In this structure, both the pump unit 30 and the valve unit 20 can be offset with respect to the cylinder body S.

A description is provided next of the invention' s effects in the first embodiment. The hydraulic device of the present invention includes the oil passage members 20, 30 that are respectively formed with the oil passages Ep, 31, and the cylinder body S, and the oil passage members 20, 30 are connected to the cylinder body S via the respective extensions 40 each having the oil passage 41 that provides communication between the oil passage Ep, 31 of the oil passage member 20, 30 and the interior of the cylinder body S. As such, the oil passage members 20, 30 can be mounted to the cylinder body S without being provided with any pipes. As compared with cases where the oil passage members 20, 30 are positioned with respect to the cylinder body S by welding pipes, some assembly work can be saved, and cost saving can be achieved. According to this structure, the oil passage member 20, 30 can be offset with respect to the cylinder body S by the axial length L1 and the radial length L2 of the extension 40. For this reason, the offset amount can be changed only by changing the extension 40 without a design change to the cylinder body S. As such, in a place where a hydraulic device is placed, such as a railroad vehicle, with use of an extension 40 that has its axial length L1 and its radial length L2 adjusted according to position of an obstacle such as a brake pipe disposed between a vehicle body and a truck, the oil passage members 20, 30 can be mounted while avoiding the obstacle. Ease of mounting of the hydraulic device to, for example, the railroad vehicle thus improves.

In the hydraulic device of the present invention, the position where the oil passage member 20, 30 is connected to the extension 40 and the position where the cylinder body S is connected to the extension 40 are offset either axially or along the periphery of the cylinder body S or both. According to this structure, the oil passage member 20, 30 can be positioned in a location of choice with respect to the cylinder body S, so that the oil passage member 20, 30 can be mounted to the cylinder body S according to the position of the obstacle. The ease of mounting of the hydraulic device to, for example, the railroad vehicle thus improves.

In the hydraulic device of the present invention, the oil passage member 20, 30 is mounted to the extension 40 to be away from the cylinder-end bracket 4a. In cases where the hydraulic device is placed, for example, between the vehicle body and the truck of the railroad vehicle, the bolts are inserted into the bracket 4a to secure the hydraulic device. According to this structure, the oil passage member 20, 30 is mounted in a location away from the bracket 4a, thereby being prevented without fail from interfering with the member such as the bolt that is joined to the bracket 4a. The oil passage member 20, 30 thus is not an obstacle when the hydraulic device is secured.

In the hydraulic device of the present invention, the end cap 4 that closes one end of the cylinder body S and has the bracket 4a is mounted with the extension 40. In cases where the extension 40 is connected to the outer cylinder 3, the outer cylinder 3 needs to be provided with a new oil passage for communication between the oil passage member 20, 30 and the interior of the cylinder body S. In the structure in which the extensions 40 are mounted to the end cap 4, easier connection can be achieved between the oil passage 41 formed in the extension 40 and the laterally opening passageways 4e, 4f, 4i of the end cap 4. Moreover, according to this structure, the oil passage member 20, 30 is provided on the cylinder side of the cylinder body S, thus being separated from the dust boot 33 that is mounted on a rod side of the cylinder body S to shield the rod 2 from flying stones, dust and others. Even while the hydraulic device is driven, there is thus no possibility of interference caused to the oil passage member 20, 30. As such, the dust boot 33 has improved flexibility in material and shape. For this reason, in cases where the hydraulic device is placed particularly between the vehicle body and the truck of the railroad vehicle, an iron dust boot that is tough against a strong shock such as a flying stone can be adopted.

### <Second Embodiment>

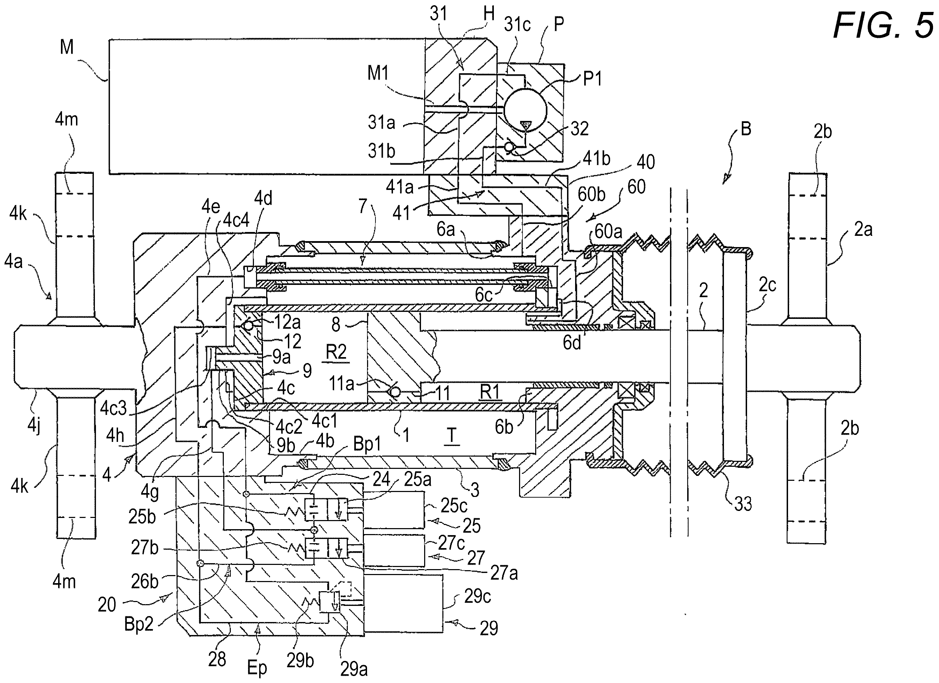

A description is provided next of an actuator B according to the second embodiment. As shown in Fig. 5, the actuator B differs from the actuator A in that the extension 40 is mounted to a rod guide 60 that is provided at the other end of the cylinder 1, that is to say, the right end of the cylinder 1 in the drawing, to support the rod 2.

The description here is mainly about the different one compared with the actuator A of the first embodiment, and structures having similar functions have the same reference marks and are not explained.

As shown in Fig. 5, the rod guide 60 of the actuator B is formed with a laterally opening passageway 60a that communicates with the expansion-side chamber R1, and a laterally opening passageway 60b that communicates with the tank T. The passageway 60b connects with the suction oil passage 31a of the pump unit 30 as the oil passage member via the first oil passage 41a of the extension 40, while the passageway 60a connects with the discharge oil passage 31b via the second oil passage 41b of the extension 40.

As such, as the motor M is driven, the shaft M1 is rotationally driven, and the pump body P1 can suck in the liquid from the tank T via the passageway 60b and the first oil passage 41a to supply the expansion-side chamber R1 with the liquid via the second oil passage 41b and the passageway 60a.

Except for the above, the actuator B and the actuator A of the first embodiment have the structures in common, and the actuator B can be driven actively to extend and contract through switching of the first on-off valve 25, the second on-off valve 27, and the variable relief valve 29.

Thus, even the invention in the second embodiment has effects that are similar to the effects of the invention in the first embodiment.

According to the invention in the second embodiment, the extension 40 is mounted to the rod guide 60 that is provided at another end of the cylinder body S to support the rod 2. In this structure in which the extension 40 is mounted to the rod guide 60, easier connection can be achieved between the oil passage 41 formed in the extension 40 and the laterally opening passageways 60a, 60b of the rod guide 60 as compared with cases where the extension 40 is connected to the outer cylinder 3.

The preferred embodiments of the present invention have been detailed above. However, alterations, modifications, and changes are possible without departing from the scope of the claims.

The present application claims a priority of Japanese Patent Application No. 2015-210386 filed with the Japanese Patent Office on October 27, 2015, all the contents of which are incorporated herein by reference.

## Claims

1. A hydraulic device comprising:
a cylinder body including a cylinder and a rod that moves retractably inside the cylinder, the rod being provided with a piston that divides an interior of the cylinder into an expansion-side chamber and a contraction-side chamber;
an oil passage member formed with an oil passage; and
an extension formed with an oil passage,
wherein the oil passage of the oil passage member communicates with the cylinder body via the extension.

2. The hydraulic device according to claim 1,
wherein a position where the oil passage member is connected to the extension and a position where the cylinder body is connected to the extension are offset either axially or along a periphery of the cylinder body or both.

3. The hydraulic device according to claim 1,
wherein the cylinder body further includes a rod-end mounting member and a cylinder-end mounting member, and
the oil passage member is mounted to the extension to be away from the cylinder-end mounting member.

4. The hydraulic device according to claim 1,
wherein the cylinder body further includes an end cap that closes one end of the cylinder body, and
the extension is mounted to the end cap.

5. The hydraulic device according to claim 1,
wherein the cylinder body further includes a rod guide provided at another end of the cylinder body, the rod guide supporting the rod, and
the extension is mounted to the rod guide.

6. The hydraulic device according to claim 1, further comprising:
an outer cylinder accommodating the cylinder;
a tank formed between the cylinder and the outer cylinder, the tank accommodating liquid;
a piston passage provided in the piston, the piston passage being configured to allow only passage of the liquid from the contraction-side chamber to the expansion-side chamber; and
a valve case closing one end of the cylinder, the valve case having an inlet passage that is configured to allow only passage of the liquid from the tank to the contraction-side chamber,
wherein the oil passage of the oil passage member provides communication between the expansion-side chamber and the tank via the oil passage of the extension, and
a variable relief valve that is possible of valve opening pressure change is provided at an intermediate position in the oil passage of the oil passage member.

7. The hydraulic device according to claim 1, further comprising:
an outer cylinder accommodating the cylinder;
a tank formed between the cylinder and the outer cylinder, the tank accommodating liquid;
a piston passage provided in the piston, the piston passage being configured to allow only passage of the liquid from the contraction-side chamber to the expansion-side chamber;
a valve case closing one end of the cylinder, the valve case having an inlet passage that is configured to allow only passage of the liquid from the tank to the contraction-side chamber;
the oil passage member including a pump that supplies the expansion-side chamber with the liquid from the tank via the oil passage of the extension, and a motor that drives the pump; and
a liquid pressure circuit,
wherein the liquid pressure circuit includes:
a first bypass passage that allows only passage of the liquid from the expansion-side chamber to the contraction-side chamber;
a first on-off valve provided at an intermediate position in the first bypass passage;
a second bypass passage that allows only passage of the liquid from the contraction-side chamber to the tank;
a second on-off valve provided at an intermediate position in the second bypass passage;
an exhaust passage connecting the expansion-side chamber to the tank; and
a variable relief valve provided at an intermediate position in the exhaust passage, the variable relief valve being possible of valve opening pressure adjustment.
